Europäisches Patentamt

European Patent Office

Office européen des brevets

(19)

(11) Veröffentlichungsnummer: **0 145 870**
**B1**

(12) # EUROPÄISCHE PATENTSCHRIFT

(45) Veröffentlichungstag der Patentschrift:
17.12.86

(21) Anmeldenummer: 84111877.1

(22) Anmeldetag: 04.10.84

(51) Int. Cl.⁴: **C 01 B 19/00**

(54) **Verfahren zur Herstellung von Alkalimetallselenat.**

(30) Priorität: 27.10.83 DE 3338893

(43) Veröffentlichungstag der Anmeldung:
26.06.85 Patentblatt 85/26

(45) Bekanntmachung des Hinweises auf die Patenterteilung:
17.12.86 Patentblatt 86/51

(84) Benannte Vertragsstaaten:
BE FR GB IT NL SE

(56) Entgegenhaltungen:
EP-A-0 112 310
DE-A-1 667 764
GB-A-808 637
US-A-2 583 799

GMELINS HANDBUCH DER ANORGANISCHEN
CHEMIE System Nr. 10, Band Selen B; 1949,
GMELIN VERLAG GMBH, Clausthal-Zellerfeld,
Seiten 74 und 79
HANDBUCH DER PRÄPARATIVEN
ANORGANISCHEN CHEMIE, 3. Auflage; 1975, F.
ENKE VERLAG, Stuttgart, Seite 425

(73) Patentinhaber: Degussa Aktiengesellschaft,
Weissfrauenstrasse 9, D-6000 Frankfurt am Main
1 (DE)

(72) Erfinder: Kaufmann, Lothar, Dr., Uferstrasse 1,
D-5202 Hennef (DE)
Erfinder: Hellwig, Klaus- D., Hubertusstrasse 13,
D-5340 Bad Honnef 6 (DE)

## Beschreibung

Die vorliegende Erfindung betrifft ein Verfahren zur Herstellung von Alkalimetallselenat durch Oxidation von pulverförmigem metallischen Selen mit Nasserstoffperoxid, Neutralisieren der gebildeten Säure mit Alkalimetallhydroxid oder -carbonat sowie Isolierung des Produkts durch Eindampfen zur Trockne. Der Vorteil des neuen Verfahrens liegt in einergegenüber den bekannten Verfahren stark vereinfachten Arbeitsweise und in einer höheren Produktreinheit.

Selen ist ein für die Tierernährung wichtiges Spurenelement. Sein Fehlen führt u. a. zu Muskelfunktionsstörungen. Ausschließlich auf der Weide gehaltenes Vieh (z.B. das Schaf) nimmt die notwendige Menge des Elements in der Regel mit der Futterpflanze auf. Auf selenarmen Böden muß jedoch den Weidepflanzen Selen künstlich zugeführt werden; dies geschieht in Form des gut pflanzenaufnehmbaren Alkalimetallselenats. Das Selenat wird in diesem Fall als Mischungskomponente den regelmäßig ausgebrachten Düngemitteln zugefügt. Zur Deckung des Bedarfs an Alkalimetallselenaten stehen derzeit nur Verfahren zur Verfügung, die entweder kompliziert und damit kostenaufwendig sind oder solche, die zu unterprozentigen Produkten führen.

Die Aufgabe der vorliegenden Erfindung besteht deshalb darin, ein möglichst einfaches Verfahren zur Herstellung von Alkalimetallselenaten hoher Reinheit zur Verfügung zu stellen.

Nach dem Stand der Technik gibt es eine Reihe von Verfahren, die von Alkalimetallselenit oder Seleniger Säure ausgehen. Der entscheidende Verfahrensschritt ist dabei die Oxidation des Selenitions zum Selenation. Hier sind folgende Möglichkeiten bekannt:

1. Man erhitzt Alkalimetallselenit im Sauerstoffstrom auf etwa 700°C. Diese Reaktion führt jedoch nur zu einem 90 Gewichtsprozent Selenat enthaltenden Produkt. Ein Zusatz von Alkalimetallnitrat verbessert zwar den Umsatz geringfügig, drückt aber gleichzeitig den $Na_2SeO_4$-Gehalt des Endproduktes. Zudem erschwert das Durchlaufen verschiedener Schmelzpunkte des Reaktionsgemisches bei diesem Ofenprozeß seine technische Durchführbarkeit in hohem Maße (Gmelins Handbuch der Anorganischen Chemie, Bd. Selen B (1949), S. 79).

2. Man geht aus von einer Lösung der Selenigen Säure, fügt Wasserstoffperoxid hinzu, erwärmt dann und kocht die Mischung unter Durchleiten von Sauerstoff 12 Stunden am Rückflußkühler. Obwohl bei diesem langwierigen Vorgehen mehr als 325 % der stöchiometrischen Menge an Wasserstoffperoxid verwendet wird, liegen am Ende des Prozesses in der Lösung maximal nur 97 Gewichtsprozent Selensäure neben 3 Gewichtsprozent (oder mehr) nicht umgesetzter Seleniger Säure vor. Ferner ist zu beachten, daß bei diesem Prozeß ein zusätzlicher Verfahrensschritt zur Herstellung von Seleniger Säure bzw. Selendioxid notwendig ist, und sich daran erst die Oxidation mit Wasserstoffperoxidlösung zum Selenat anschließt (Handbuch der Präparativen Anorganischen Chemie von G. Brauer, 3. Aufl. (1975), S. 425).

3. Man oxidiert die Lösung eines Alkalimetallselenits mit Kaliumpermanganat oder Chlorsäure. Hier ist die Abtrennung der eingeschleppten Fremdionen langwierig. Das Selenat muß deshalb zunächst mit einem löslichen Bariumsalz ausgefällt und anschließend das entstandene Alkalimetallselenat mit Schwefelsäure zu Selensäure und Bariumsulfat, welches abgetrennt werden muß, umgesetzt werden. Die Ausbeute liegt bei diesem Verfahren, bezogen auf das eingesetzie Selenit, unter 70 Gewichtsprozent (Gmelins Handbuch der Anorganischen Chemie, Bd. Selen B (1949), S. 74 ff).

4. Man geht von Alkalimetallselenitlösung aus, welche einem Elektrolyseprozeß unterworfen wird. An der Anode wird Selenit quantitativ zu Selenat oxidiert. Der Nachteil dieses Verfahrens ist der sehr hohe technische und finanzielle Aufwand, der für den Betrieb und vor allem für den Bau der Elektrolysezellen erforderlich ist, in denen Anoden- und Kathodenraum durch eine für Anionen undurchlässige Membran getrennt sein müssen (US-PS 2 583 799).

5. Man oxidiert metallisches Selen in Pulverform mit 20 - 80 gewichtsprozentigem Wasserstoffperoxid, indem man zunächst die Mischung der beiden Reaktanten unter Kühlung 20 bis 24 Stunden stehen läßt, dann auf dem Wasserbad erwärmt und während 8 bis 12 Stunden weiteres Wasserstoffperoxid zufügt. Nachteil dieses Verfahrens ist seine Langwierigkeit, der außerordentlich 1 hohe Oxidationsmittelverbrauch (21 - 27 Mol $H_2O_2$/Mol Se) und die verhältnismäßig geringe Ausbeute von durchschnittlich 94 Gewichtsprozent $H_2SeO_4$ (B.Malinak, Collection Czechoslov. Chem. Commun. Vol. 21 (1956), S. 1073).

Die nach den Oxidationsverfahren 2. - 5. erhaltenen Selensäurelösungen können nun in üblicher Weise mit Alkalimetallhydroxid neutralisiert und das Alkalimetallselenat durch Abdampfen des Wassers gewonnen werden.

Das erfindungsgemäße Verfahren zielt darauf ab, die Nachteile der vorhandenen Verfahren insoweit zu überwinden, als einerseits das Herstellverfahren vereinfacht und dessen ungeachtet Alkalimetallselenat mit einem Gehalt von bis über 99,5 Gewichtsprozent $Na_2SeO_4$ erhalten wird.

Dies gelingt erfindungsgemäß durch eine Steuerung des an sich bekannten Umsatzes von pulverförmigem metallischen Selen mit Wasserstoffperoxid nach der Reaktionsgleichung

$$Se + 3H_2O_2 \rightleftharpoons H_2SeO_4 + 2H_2O$$

und anschließender Neutralisation, z. B. gemäß

$$H_2SeO_4 + 2NaOH \rightarrow Na_2SeO_4 + 2H_2O,$$

die dadurch gekennzeichnet ist daß man 4 - 6 Mol $H_2O_2$/ Mol Se in Form einer 30 - 50 gewichtsprozentigen Wasserstoffperoxidlösung vorlegt, diese auf eine Temperatur von 30 - 100° C erwärmt und das Selenpulver höchstens in einer der Auflösungsgeschwindigkeit der Selenteilchen entsprechenden aber eine Erwärmung des Reaktionsmediums auf Siedetemperatur sowie eine Aufrechterhaltung dieser Temperatur bewirkenden Dosiergeschwindigkeit so auf die ruhende Oberfläche des Reaktionsmediums aufgibt, daß die Auflösung des Selenpulvers bereits in dessen Oberflächenbereich erfolgt, nach Beendigung des Seleneintrags und vollständiger Auflösung der letzten Selenteilchen nachreagieren läßt, bis die Gasentwicklung aufhört, dann unter Rühren Alkalimetallhydroxid bzw. -carbonat bei einer Temperatur von 80 - 100° C zufügt, bis ein pH von 0,5 - 5, vorzugsweise von 3, erreicht ist, das Reaktionsmedium hierauf bei einer Temperatur von 30 - 100' C mit 0,5 - 1 Mol $H_2O_2$/Mol Se in Form einer 30 - 50 gewichtsprozentigen Wasserstoffperoxidlösung versetzt, die dabei auftretende Temperatur auf 90 - 100° C begrenzt und bis zum Aufhören der Gasentwicklung aufrechterhält und dann die Neutralisation der Selensäure auf pH 7 und die Isolierung deren Salzes anschließt.

Das Selenpulver kann in der handelsüblichen Form mit einer Teilchengröße von unterhalb 63 μm verwendet werden. Bevorzugt ist eine Zugabeform als wäßrige Aufschlämmung, wobei diese 0,5 - 5, vorzugsweise 2 Gewichtsteile Selen auf 1 Gewichtsteil Wasser enthält. Die Aufschlämmung wird am besten mittels einer Exzenterschneckenpumpe dosiert. Da der im Verfahren erzielbare Stoffdurchsatz umso größer ist je größer bei gleichem Volumen die Oberfläche des Reaktionsmediums ist, wird am besten ein Reaktionsbehälter eingesetzt, bei dem das Verhältnis von Durchmesser zu Höhe 1 $\geqslant$ 1 ist.

Es hat sich als zweckmäßig erwiesen, das Selen bzw. seine wäßrige Aufschlämmung in die Mitte der Flüssigkeitsoberfläche des Reaktionsmediums aufzugeben. Die Selenteilchen schwimmen vom Aufgabeort nach außen und sollen sich dabei vor Erreichen der Behälterwandung im Wasserstoffperoxid auflösen. Überraschenderweise werden geringere Ausbeuten erhalten, wenn die Selenteilchen die Behälterwand erreichen und sich dort ansammeln oder wenn sie durch Rühren im Wasserstoffperoxid verteilt werden. Es ist anzunehmen, daß in diesen Fällen ein Teil des Wasserstoffperoxids durch Zersetzung verlorengebt, wofür auch eine verstärkte Gas- und Schaumentwicklung spricht.

Im Verfahren wird am günstigsten eine mittlere Wasserstoffperoxidkonzentration angewandt. Es hat sich für die Erzielung eines raschen Umsatzes und für die Vermeidung von $H_2O_2$-Verlusten als zweckmäßig erwiesen, daß die Konzentration der Wasserstoffperoxidlösung bei beiden Oxidationsstufen 35 Gewichtsprozent beträgt.

Die beiden Oxidationsstufen werden bevorzugt bei einer Anfangstemperatur von 50 - 70, vorzugsweise 60° C, begonnen. Durch die erfindungsgemäß vorzunehmende Einstellung der Dosiergeschwindigkeit für das Selen in der ersten Oxidationsstufe steigt aufgrund der Wärmetönung der Reaktion die vorgegebene Temperatur des Reaktionsmediums rasch auf die Siedetemperatur an (105° C, wenn 35 gewichtsprozentiges $H_2O_2$ verwendet wird); Siedetemperatur wird während der Dauer des Seleneintrags beibehalten. Während der Nachreaktion kühlt sich das Reaktionsgemisch etwas ab, z. B. auf 60° C. Bei dieser Temperatur kann die Vorneutralisation begonnen werden; die Temperatur wird dabei in einem Bereich von 80 - 100° C gehalten; 95° C sind bevorzugt.

Dann wird die gewünschte Reaktionstemperatur für die zweite Oxidationsstufe eingestellt und das gesamte für die zweite Oxidationsstufe vorgesehene Oxidationsmittel auf einmal zugefügt. Der damit verbundene Temperaturanstieg wird auf 95 - 100° C begrenzt, um ein Überschäumen zu verhindern. In dieser Stufe wird eine Mindesttemperatur von 90° C benötigt.

Das Ende der Nachreaktion in der ersten Oxidationsstufe und das Ende der zweiten Oxidationsstufe kann jeweils daran erkannt werden, daß die Sauerstoffentwicklung, welche die Umsetzung begleitet, im Reaktionsmedium zum Erliegen kommt.

In der Vor- und Endneutralisierungsstufe kann mit Vorteil 50 gewichtsprozentige Natronlauge oder gesättigte wäßrige Sodalösung eingesetzt werden.

Das Wesen des neuen Verfahrens zur Herstellung von Alkalimetallselenat durch Oxidation von metallischem Selen mit Wasserstoffperoxid in wäßriger Phase und Gewinnung des Produktes aus der mit Alkalimetallhydroxid neutralisierten Lösung durch Abdampfen des Wassers liegt also darin, daß das Selen, z. B. als wäßrige Anschlämmung, auf der Oberfläche der vorher erwärmten Vorlage von Wasserstoffperoxid zur Reaktion gebracht wird und auf diesen ersten Oxidationsschritt ein zweiter in der Weise erfolgt, daß Wasserstoffperoxid nach einer Teilneutralisation der in der ersten Phase entstandenen sauren Lösung zur Oxidation der Restmengen an Selenit zugefügt wird.

Der besondere Vorteil des Verfahrens beruht auf der Erkenntnis, daß die Oxidationsreaktion mit Vorteil von Anfang an bei erhöhter Temperatur durchgeführt wird und daß die Vervollständigung der Oxidation des Selenits zu Selenat mit Wasserstoffperoxid glatt bei pH 0,5 - 5, vorzugsweise 3, zu vollziehen ist; weder bei niedrigeren noch bei höheren pH-Werten ist dies im gleichen Maße möglich. Damit wird eine schnelle und vollständige Umsetzung von elementarem Selen in die sechswertige Stufe ermöglicht. Wesentlich für die neue Arbeitsweise ist auch, daß das Selenpulver Gelegenheit hat, sich auf der ruhenden Oberfläche der vorgelegten Wasserstoffperoxidlösung auszubreiten und an der Grenzfläche zu reagieren.

Bei den beschriebenen, für das neue Verfahren charakteristischen Randbedingungen sinkt gegenüber dem nächstliegenden bekannten Verfahren gemäß 5. der spezifische Bedarf an Oxidationsmittel stark ab. Es werden je nach Wasserstoffperoxidkonzentration pro Mol Selen nur noch insgesamt 5 - 7 Mol $H_2O_2$ gebraucht. Bei dem in der Literaturstelle 5 beschriebenen Verfahren werden über 20 Mol $H_2O_2$/Mol Se benötigt.

Erfindung wird im folgenden durch Ausführungsbeispiele noch erläutert.

## Beispiel 1

In einem mit Rührwerk ausgerüsteten emaillierten Stahlbehälter (Höhe 500 mm, Durchmesser 1500 mm), der über einen Doppelmantel sowohl beheizt als auch gekühlt werden kann, werden 340 kg 50 gewichtsprozentige Wasserstoffperoxidlösung vorgelegt und auf 30° C vorgewärmt. 98,7 kg Selenpulver (Korngröße < 65 μm) werden in 200 1 Wasser suspendiert, diese Suspension wird mit einer Exzenterschneckenpumpe in die Mitte der vorgelegten Flüssigkeit (bei stehendem Rührwerk) eindosiert. Die Dosiergeschwindigkeit wird so eingestellt, daß der Reaktionslösung 1 kg Selen pro Minute zugeführt werden. Die Temperatur steigt zu Beginn der Reaktion des Wasserstoffperoxids mit dem Selen auf 105° C an und bleibt bis zum Ende des Seleneintrags erhalten. Die Selenteilchen bewegen sich von der Eintragsstelle in Richtung zur Behälterwand und lösen sich auf diesem Wege vollständig auf. Die Lösung wird nach Beendigung des Seleneintrags 60 Minuten nachreagieren gelassen und auf 60° C abgekühlt. Durch Zugabe von 246 kg 40 gewichtsprozentiger Kalilauge erfolgt dann, ebenfalls unter Rühren, eine Teilneutralisation der Lösung bis auf pH 0,5.

Die Temperatur der Lösung bei der Neutralisation wird auf 80° C eingestellt. Danach wird auf 60° C abgekühlt. Dann werden, nach Stillsetzen des Rührers 84,5 kg 50 gewichtsprozentige Wasserstoffperoxidlösung einfließen gelassen, wobei die Temperatur der Lösung auf 45° C absinkt. Unter Rühren wird auf 50° C aufgeheizt und der Rührer erneut stillgesetzt. Die Temperatur der Reaktionslösung steigt bei der nun einsetzenden zweiten Oxidationsstufe, die 45 Minuten dauert und deren Ende am Abklingen der Gasentwicklung erkennbar wird, an und wird auf 90° C begrenzt. Nach einer Nachreaktionszeit von 60 Minuten wird unter Rühren auf 60° C abgekühlt und durch Zufügen von 106 kg 40 gewichtsprozentiger Kalilauge ein pH von 7,0 eingestellt. Die Lösung wird einer Zerstäubungstrocknung zugeführt. Es resultieren 231 kg Kaliumselenat mit einem Gehalt von 99,7 % $K_2SeO_4$.

## Beispiel 2

Es wird gearbeitet wie in Beispiel 1 beschrieben, jedoch mit folgenden Änderungen:.

Es werden 243 kg 35 gewichtsprozentiges Wasserstoffperoxid vorgelegt und auf 60° C aufgeheizt. 39,5 kg Selenpulver werden in 8 l Wasser suspendiert. Bei einer Dosiergeschwindigkeit des Selens von 1 kg/Min. beträgt die Gesamteintragszeit 40 Minuten. Die Teilneutralisation wird mit 75 kg 50 gewichtsprozentiger Natronlauge durchgeführt, wobei ein pH von 3,0 erreicht wird. Die Temperatur bei der Teilneutralisation wird auf 90° C eingestellt. In der zweiten Oxidationsstufe, die bei 60° C begonnen wird, werden 48,6 kg 35-gewichtsprozentiges Wasserstoffperoxid verwendet und die Temperatur der Reaktionslösung wird auf 95° C begrenzt. Die Reaktionsdauer beträgt 40 Minuten. In der zweiten Neutralisationsstufe werden 5,6 kg 50 gewichtigsprozentige Natronlauge verwendet. Das nach diesem Verfahren hergestellte Produkt enthält 99,7 % $Na_2SeO_4$.

## Beispiel 3

Es wird gearbeitet wie in Beispiel 1 beschrieben, jedoch mit folgenden Änderungen:

Es werden 340 kg 30 gewichtsprozentiges Wasserstoffperoxid vorgelegt und auf 70° C aufgeheizt. 39,5 kg Selen werden in Pulverform in die Mitte der Oberfläche der Vorlage eingebracht. Bei einer Dosiergeschwindigkeit des Selens von 1 kg/Min. beträgt die Gesamteintragszeit 40 Minuten. Die Teilneutralisation wird mit 58 kg festem Lithiumhydroxid (LiOH . $H_2O$) durchgeführt, wobei ein pH von 5,0 erreicht wird. Die Temperatur bei der Teilneutralisation wird auf 100° C eingestellt. In der zweiten Oxidationsstufe, die bei 70° C begonnen wird, werden 57 kg 30 gewichtsprozentiges Wasserstoffperoxid verwendet und die Temperatur der Reaktionslösung wird auf 100° C gebracht. Die Reaktionsdauer beträgt 40 Minuten. In der zweiten Neutralisationsstufe werden 1,3 kg festes Lithiumhydroxid verwendet. Das nach diesem Verfahren hergestellte Produkt enthält 99,6 % $Li_2SeO_4$.

**Patentansprüche**

1. Verfahren zur Herstellung von Alkalimetallselenat durch Oxidation von pulverförmigem metallischen Selen mit Wasserstoffperoxid, Neutralisieren der gebildeten Säure mit Alkalimetallhydroxid oder -carbonat sowie Isolierung des Produkts durch Eindampfen zur Trockne, dadurch gekennzeichnet, daß man 4 - 6 Mol $H_2O_2$/Mol Se in Form einer 30 - 50 gewichtsprozentigen Wasserstoffperoxidlösung vorlegt, diese auf eine Temperatur von 30 - 100° C erwärmt und das Selenpulver höchstens in einer der Auflösungsgeschwindigkeit der Selenteilchen entsprechenden aber eine Erwärmung des Reaktionsmediums auf Siedetemperatur sowie eine Aufrechterhaltung dieser Temperatur bewirkenden Dosiergeschwindigkeit so auf die ruhende Oberfläche des Reaktionsmediums aufgibt, daß die Auflösung des Selenpulvers bereits in dessen Oberflächenbereich erfolgt, nach Beendigung des Seleneintrags und vollständiger Auflösung der letzten Selenteilchen nachreagieren läßt, bis die Gasentwicklung aufhört, dann unter Rühren Alkalimetallhydroxid bzw. -carbonat bei einer Temperatur von 80 - 100° C zufugt, bis ein pH von 0,5 - 5, vorzugsweise von 3, erreicht ist, das Reaktionsmedium hierauf bei einer Temperatur von 30 - 100° C mit 0,5 - 1 Mol $H_2O_2$/Mol Se in Form einer 30 - 50 gewichtsprozentigen Wasserstoffperoxidlösung versetzt, die dabei auftretende Temperatur auf 90 - 100° C begrenzt und bis zum Aufhören der Gasentwicklung aufrechterhält und dann die Neutralisation der Selensäure auf pH 7 und die Isolierung deren Salzes anschließt.

2. Verfahren nach Anspruch 1, dadurch gekennzeichnet, daß das Selenpulver als Aufschlämmung in Wasser eingesetzt wird, wobei diese 0,5 - 5, vorzugsweise 2 Gewichtsteile Selen auf 1 Gewichtsteil Wasser enthält.

3. Verfahren nach Anspruch 1 oder 2, dadurch gekennzeichnet, daß das Selen bzw. seine wäßrige Aufschlämmung in die Mitte der Flüssigkeitsoberfläche des Reaktionsmediums aufgegeben wird.

4. Verfahren nach den Ansprüchen 1 bis 3, dadurch gekennzeichnet, daß die Konzentration der Wasserstoffperoxidlösung bei beiden Oxidationsstufen 35 Gewichtsprozent beträgt.

5. Verfahren nach den Ansprüchen 1 bis 4, dadurch gekennzeichnet, daß die beiden Oxidationsstufen bei einer Temperatur von 50 - 70, vorzugsweise 60° C, begonnen werden.

6. Verfahren nach den Ansprüchen 1 bis 5, dadurch gekennzeichnet, daß in der Vorneutralisationsstufe eine Temperatur von 95° C eingehalten wird.

7. Verfahren nach den Ansprüchen 1 bis 6, dadurch gekennzeichnet, daß in der Vor- und Endneutralisierungsstufe 50 gewichtsprozentige Natronlauge oder gesättigte wäßrige Sodalösung eingesetzt wird.

**Claims**

1. A process for the preparation of alkali metal selenate by oxidation of powdered metallic selenium with hydrogen peroxide, neutralisation of the resultant acid with alkali metal hydroxide or carbonate and isolation of the product by evaporation to dryness, characterised in that from 4 to 6 mol of $H_2O_2$ per mol of Se are used as starting material in the form of a 30 - 50% by weight hydrogen peroxide solution, this solution is heated to a temperature of from 30 to 100° C and the selenium powder is charged onto the calm surface of the reaction medium at most at the metering rate corresponding to the dissolving speed of the selenium particles but effecting heating of the reaction medium to the boiling temperature and maintaining this temperature in such a way that the selenium powder is dissolved in the surface region of the reaction medium, the solution is allowed to continue reacting after completion of introduction of selenium and complete dissolution of the last selenium particles until the evolution of gas ceases, alkali metal hydroxide or carbonate is then added while stirrig at a temperature of from 80 to 100° C until a pH of from 0.5 to 5, preferably of 3, is attained, the reaction medium is then reacted at a temperature of from 30 to 100° C with from 0.5 to 1 mol of $H_2O_2$ per mol of Se in the form of a 30 to 50% by weight hydrogen peroxide solution, the temperature occurring thereby is restricted to 90 to 100° C and is maintained until the evolution of gas ceases and neutralisation of the selenic acid to pH 7 and isolation of the salt thereof then follow.

2. A process according to Claim 1, characterised in that the selenium powder is used as a suspension in water, the suspension containing from 0.5 to 5, preferably 2 parts by weight of selenium per 1 part by weight of water.

3. A process according to Claim 1 or 2, characterised in that the selenium or the aqueous suspension thereof is charged into the centre of the liquid surface of the reaction medium.

4. A process according to Claims 1 to 3, characterised in that tha concentration of the hydrogen peroxide solution is 35% by weight during both stages of oxidation.

5. A process according to Claims 1 to 4, characterised in that the two stages of oxidation are begun at a temperature of from 50 to 70, preferably 60° C.

6. A process according to Claims 1 to 5, characterised in that a temperature of 95° C is observed in the pre-neutralisation stage.

7. A process according to Claims 1 to 6, characterised in that 50% by weight sodium hydroxide solution or saturated aqueous soda solution is used in the pre-neutralisation and final neutralisation stage:

**Revendications**

I- Procédé pour la préparation de séléniate de métal alcalin par oxydation de sélénium métallique pulvérulent avec du peroxyde d'hydrogène, neutralisation de l'acide formé avec un hydroxyde ou un carbonate de métal alcalin et isolement du produit par évaporation à siccité, caractérisé par le fait que l'on introduit au préalable 4-6 moles d'$H_2O_2$/mole de Se sous forme d'une solution de peroxyde d'hydrogène à 30-50% en poids, qu'on les porte à une température de 30-100'C et que l'on dépose la poudre de sélénium à la surface du milieu réactionnel au repos au maximum à une cadence d'addition correspondant à la vitesse de dissolution des particules de sélénium, mais provoquant un échappement du milieu réactionnel à la trempéature d'ébullition ainsi qu'un maintien de cette température, si bien que la dissolution de la poudre de sélénium se produit déjà dans la zone superficielle de ce milieu une fois terminée l'addition du sélénium et après complète dissolution des dernières particules de sélénium, on laisse la réaction se poursuivre, jusqu'à ce que le dégagement de gaz cesse, puis on ajoute, sous agitation, l'hydroxyde ou le carbonate de métal alcalin à une température de 80-100°C, jusqu'à ce qu'un pH de 0,5-5, de préférence de 3, soit atteint, après quoi on ajoute au milieu réactionnel, à une température de 30-100°C, 0,5-1 mole d'$H_2O_2$/mole de Se sous forme d'une solution de peroxyde d'hydrogène à 30-50% en poids, on limite la température engendrée à cette occasion à 90-100°C et on la maintient jusqu'à l'arrêt du dégagement de gaz, et on procède ensuite à la neutralisation de l'acide sélénique à pH 7 et à l'isolement du sel de celui-ei.

2- Procédé selon la revendication 1, caractérisé par le fait que la poudre de sélénium est utilisée sous forme de suspension dans l'eau, celle-ci contenant 0,5-5, de préférence 2 parties en poids de sélénium pour une partie en poids d'eau.

3- Procédé selon la revendication 1 ou 2, caractérisé par le fait que le sélénium ou la suspension aqueuse de celui-ci est ajouté au milieu de la surface du liquide du milieu réactionnel.

4- Procédé selon les revendications 1 à 3, caractérisé par le fait que la concentration de la solution de peroxyde d'hydrogène est égale à 35% en poids dans les deux stades d'oxydation.

5- Procédé selon les revendications 1 à 4, caractérisé par le fait que les deux stades d'oxydation sont commencés à une température de 50-70, de préférence de 60°C.

6- Procédé selon les revendications 1 à 5, caractérisé par le fait que dans le stade de neutralisation préalable, on maintient une température de 95°C.

7- Procédé selon les revendications 1 à 6, caractérisé par le fait que dans le stade de neutralisation préalable et dans le stade de neutralisation final on utilise une solution de bicarbonate de sodium à 50% en poids ou une solution aqueuse de carbonate de sodium saturée.